# FASCICULE DE BREVET EUROPEEN

(11) **EP 3 875 302 B1**
(45) Date de publication et mention de la délivrance du brevet: **02.08.2023**
(21) Numéro de dépôt: 21158061.8
(22) Date de dépôt: 19.02.2021
(51) Int. Cl.: B60L 5/38, B60L 15/20, B60L 15/32, B60L 50/53

(54) **PROCÉDÉ DE FRANCHISSEMENT PAR UN VÉHICULE ÉLECTRIQUE CONSTITUÉ D'AU MOINS DEUX UNITÉS D'UNE ZONE NEUTRE D'UN SYSTÈME D'ALIMENTATION ÉLECTRIQUE, VÉHICULE ÉLECTRIQUE ASSOCIÉ**
VERFAHREN ZUM DURCHFAHREN EINER NEUTRALEN ZONE EINES STROMVERSORGUNGSSYSTEMS DURCH EIN ELEKTROFAHRZEUG, DAS AUS MINDESTENS ZWEI EINHEITEN BESTEHT, UND ENTSPRECHENDES ELEKTROFAHRZEUG
METHOD FOR CROSSING BY AN ELECTRIC VEHICLE MADE UP OF AT LEAST TWO UNITS OF A NEUTRAL AREA OF A POWER SUPPLY SYSTEM; ASSOCIATED ELECTRIC VEHICLE

(30) Priorité: 21.02.2020 FR 2001735
(43) Date de publication de la demande: 08.09.2021
(73) Titulaire: ALSTOM Transport Technologies, 93400 Saint-Ouen (FR)
(72) Inventeur: RENIE, Matthieu, 17139 DOMPIERRE SUR MER (FR); JEANNEAU, Pierre, LONDRES, NW3 4EU (GB)
(74) Mandataire: Lavoix

(56) Documents cités:
- EP-A1- 3 473 485
- EP-A1- 3 584 107
- EP-A2- 2 127 935
- JP-A- 2012 029 560

## Description

L'invention a pour domaine celui des véhicules électriques, notamment des véhicules électriques guidés (tels que des tramways), propres, au cours de leur déplacement, à capter une puissance électrique auprès d'un système d'alimentation électrique.

Les systèmes d'alimentation électrique pour des véhicules en mouvement sont bien connus. On connaît par exemple les systèmes d'alimentation par le sol, qui comportent un rail d'alimentation constitué d'une pluralité de segments disposés bout à bout selon la direction longitudinale de la chaussée.

La pluralité de segments est constituée d'une alternance de segments conducteurs et de segments isolants.

Des moyens de contrôle permettent de commander l'état d'interrupteurs afin d'alimenter sélectivement les segments conducteurs du rail d'alimentation au passage d'un véhicule.

Le véhicule électrique se déplace sur la chaussée. Il est avantageusement équipé de deux frotteurs, de sorte qu'au moins un frotteur est en contact d'un segment conducteur à chaque instant, ce segment conducteur devant être alimenté de manière à ce que le véhicule électrique puisse capter par conduction une puissance électrique depuis le sol.

Cependant, dans certaines situations, la distance entre deux segments conducteurs consécutifs le long de la direction de déplacement du véhicule est trop importante pour qu'au moins l'un des frotteurs soit en contact avec un segment conducteur. On parlera de manière générale d'une zone neutre du système d'alimentation électrique.

C'est par exemple le cas lorsque les interrupteurs associés à un ou plusieurs segments conducteurs successifs connaissent un dysfonctionnement de sorte que les segments conducteurs correspondant ne peuvent plus être alimentés au passage d'un véhicule.

C'est également le cas au niveau de points singuliers, tels qu'un appareil de voie (aiguillage) ou un croisement entre la chaussée sur laquelle circule le véhicule électrique et une route utilisée par exemple par des automobiles.

Dans ce dernier cas, pour éviter une usure prématurée des segments du rail d'alimentation et par conséquent un plus grand nombre de pannes, à cause du passage répété des automobiles, il est recommandé d'interrompre le rail d'alimentation au niveau du croisement, ou tout au moins d'utiliser uniquement un ou plusieurs segments isolants pour réaliser le rail d'alimentation au niveau du croisement.

Ainsi, entre les segments conducteurs amont et aval prévus de part et d'autre d'une zone neutre, le véhicule électrique ne pourra pas capter de puissance électrique depuis le système d'alimentation par le sol. On appelle donc zone neutre, une zone où le système d'alimentation externe au véhicule (notamment le rail d'alimentation ou la caténaire) est inapte à fournir de l'énergie au véhicule ferroviaire car non-alimenté. Un défaut d'un segment du rail d'alimentation, conduisant à l'ouverture d'un contacteur d'alimentation dudit rail peut faire apparaitre une zone neutre au niveau dudit segment dans le système d'alimentation.

Or, dans le cas où le véhicule électrique est constitué de l'attelage d'au moins deux unités, le franchissement d'une telle zone neutre présente les inconvénients suivants.

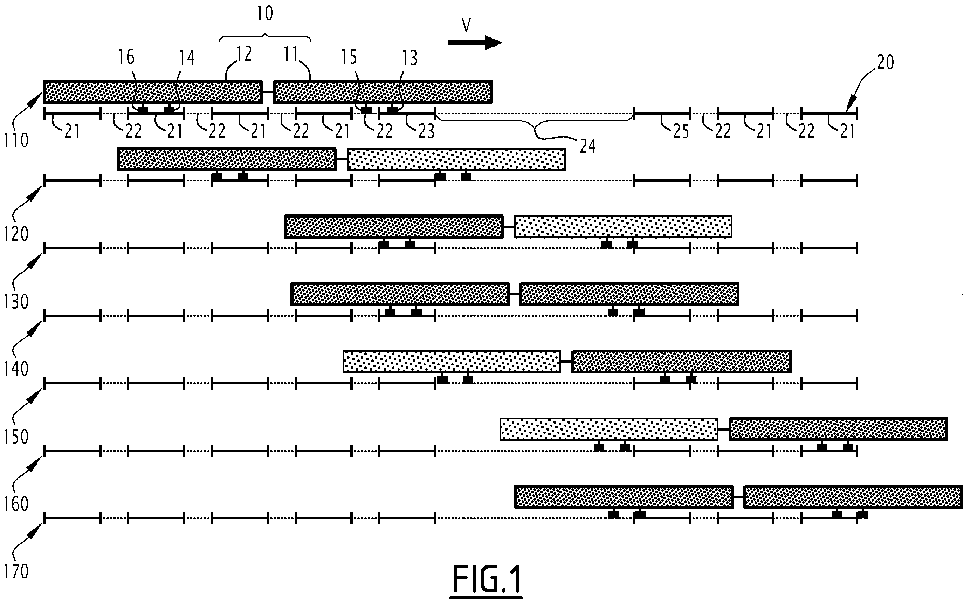

La figure 1 présente sept étapes successives du franchissement, par un véhicule électrique 10, d'une zone neutre 24 d'un rail d'alimentation 20 d'un système d'alimentation par le sol. De part et d'autre de la zone neutre 24, le rail d'alimentation 20 est constitué de segments isolants 22 et de segments conducteurs 21, 23, 25, le segment conducteur 23 étant le segment conducteur en amont de la zone neutre 24 et le segment conducteur 25 étant le segment conducteur en aval de la zone neutre 24, selon le sens de déplacement du véhicule électrique 10, qui est indiqué par la flèche V.

Le véhicule 10 est constitué de deux unités, 11 et 12, couplées mécaniquement l'une à l'autre. Ces unités sont avantageusement identiques entre elles. Elles sont motrices et propres chacune à capter de l'énergie électrique à partir du rail d'alimentation 20 au moyen d'au moins un, voire d'une paire de frotteurs, respectivement 13 et 15 pour l'unité 11 et 14 et 16 pour l'unité 12.

A la première étape 110, le véhicule 10 se situe en amont de la zone neutre 24. La paire de frotteurs équipant chacune des unités 11 et 12 du véhicule permet à celles-ci de capter de l'énergie à partir des segments conducteurs 21 convenablement alimentés au passage du véhicule 10. Chaque unité fonctionne alors dans un mode dans lequel les moteurs électriques d'une unité fonctionnent en traction en utilisant la puissance captée depuis le système d'alimentation par le sol.

Dans la seconde étape 120, au moment où l'unité de tête 11 s'engage sur la zone neutre 24, ces frotteurs, 13 et 15, ne peuvent plus recevoir d'énergie depuis le système d'alimentation par le sol. Ainsi, les moteurs de l'unité de tête 11 cessent de fonctionner en traction. Cependant, au même moment l'unité de queue 12 continue de pouvoir capter de l'énergie électrique depuis le système d'alimentation par le sol, de sorte que ses moteurs continuent de fonctionner en traction. Par conséquent, l'unité de tête 11 décélère, parfois brusquement, avant d'être poussée par l'unité de queue 12. Ainsi, en entrant sur la zone neutre 24, le véhicule est secoué par un à-coup.

Dans la troisième étape 130, le véhicule 10 s'avance sur la zone neutre 24, l'unité de tête 11 étant poussée par l'unité de queue 12, qui est la seule unité motrice.

A la quatrième étape 140, l'unité de tête 11 a franchi la zone neutre 24 et ses frotteurs atteignent le segment conducteur aval 25 de sorte que cette unité peut à nouveau fonctionner en traction.

A la cinquième étape 150, c'est l'unité de queue 12 qui entre sur la zone neutre 24. Ses frotteurs, 14 et 16, ne pouvant plus recevoir de puissance électrique depuis le sol, ses moteurs cessent alors de fonctionner en traction. Cependant, au même moment, l'unité de tête 11 continue à pouvoir capter de l'énergie électrique depuis le système d'alimentation par le sol, de sorte que ces moteurs continuent de fonctionner en traction. Par conséquent, l'unité de queue 12 décélère et est trainée par l'unité de tête. Ainsi le véhicule est secoué par un nouvel à-coup.

A la sixième étape 160, le véhicule 10 poursuit son déplacement, l'unité de queue étant passive et tractée par l'unité de tête 11, dont les moteurs, alimentés par le sol, fonctionnent en traction.

Enfin, à la septième étape 170, l'unité de queue 12 a franchi la zone neutre 24 et ses patins, 14 et 16, peuvent à nouveau capter une puissance électrique par contact sur le segment conducteur aval 25. Les deux unités fonctionnent alors toutes les deux à nouveau en traction.

Ainsi, au moins à l'entrée de chaque unité sur la zone neutre (et éventuellement à la sortie de chaque unité de cette même zone neutre), c'est-à-dire à chaque changement du mode de fonctionnement d'une unité, le véhicule électrique est secoué, ce qui induit un inconfort passager. Ces accélérations intempestives, ou plutôt ces variations d'accélération intempestives (« jerk » en anglais), peuvent parfois avoir des conséquences plus graves, par exemple lorsqu'un passager qui se tient debout à l'intérieur du véhicule est déséquilibré et tombe.

Le document EP 3 584 107 A1 divulgue l'attelage de deux véhicules comprenant, chacun, un réseau primaire d'alimentation en puissance électrique des moteurs de traction, qui est propre à collecter une puissance depuis une source externe. Le long de ce réseau primaire est prévu un convertisseur permettant d'alimenter un réseau secondaire pour des dispositifs auxiliaires. En cas de défaillance du réseau primaire d'un véhicule, les moyens de traction de l'autre véhicule sont piloter pour compenser la perte de traction. Les moteurs du véhicule dont le réseau primaire est défaillant sont commandés pour fonctionner en générateur et le convertisseur de ce véhicule est commandé pour adapter la puissance électrique produite par les moteurs afin d'alimenter le réseau secondaire de ce véhicule et permettre le fonctionnement des dispositifs auxiliaires de ce véhicule.

Le document EP 3 473 485 A1 est relatif à un procédé permettant de passer d'un premier mode de fonctionnement (« normal mode »), dans lequel la puissance de traction est répartie entre l'ensemble des N unités motrices d'un train, vers un second mode de fonctionnement (« M cars sélection mode ») dans lequel la puissance de traction est répartie entre M unités du train sélectionnées parmi les N unités motrices.

Le but de la présente invention est par conséquent de remédier à ce problème.

Ainsi, l'invention a pour objet un procédé de franchissement par un véhicule électrique constitué d'au moins deux unités, d'une zone neutre d'un système d'alimentation électrique, chaque unité comportant : un moteur ; au moins un moyen de collecte propre à collecter une puissance électrique externe auprès du système d'alimentation électrique ; et une batterie propre à délivrer une puissance électrique interne, chaque unité étant propre à fonctionner à l'instant courant dans un mode de fonctionnement sélectionné parmi une pluralité de modes de fonctionnement, la pluralité de modes de fonctionnement comportant : un mode de fonctionnement principal dans lequel le moteur fonctionne en utilisant la puissance électrique externe ; et au moins un mode de fonctionnement alternatif dans lequel le moteur n'est pas alimenté par la puissance électrique externe, ledit procédé comprenant une étape de franchissement de la zone neutre, dans laquelle, lorsqu'au moins une unité du véhicule électrique détecte être inapte à collecter la puissance électrique externe, ladite au moins une unité bascule dans le mode de fonctionnement alternatif, et transmet une information à chacune des autres unités du véhicule, ladite information étant indicative dudit basculement dans le mode de fonctionnement alternatif, et en ce que, lors de la réception de ladite information, chacune desdites autres unités bascule dans ledit mode de fonctionnement alternatif, de sorte qu'à tout instant, chaque unité se trouve dans un même mode de fonctionnement commun afin que le véhicule adopte une dynamique homogène.

Suivant des modes particuliers de réalisation le procédé comporte une ou plusieurs des caractéristiques suivantes prises isolément ou suivant toutes les combinaisons techniquement possibles :
- lors de l'étape de franchissement, lorsque l'ensemble des unités du véhicule électrique sont dans le mode de fonctionnement alternatif et que l'ensemble des unités du véhicule électrique détectent être aptes à collecter la puissance électrique externe, les unités sont propres à communiquer entre elles pour basculer dans le mode de fonctionnement principal ;
- l'étape de franchissement est mise en oeuvre pour le franchissement d'une zone neutre lorsque la vitesse du véhicule électrique est supérieure à une première vitesse seuil, la première vitesse seuil étant comprise entre 2 et 10 km/h, de préférence égale à 5 km/h ;
- ledit mode de fonctionnement principal est un premier mode de fonctionnement et ledit au moins un mode de fonctionnement alternatif comprend : un deuxième mode de fonctionnement, dans lequel le moteur est en traction inhibée, l'unité se déplaçant sur l'erre ; et un troisième mode de fonctionnement, dans lequel le moteur fonctionne en traction en utilisant la puissance électrique interne fournie par la batterie ;
- lors de l'étape de franchissement, le mode de fonctionnement alternatif correspond au troisième mode de fonctionnement si la vitesse du véhicule électrique est inférieure à une seconde vitesse seuil, et le mode de fonctionnement alternatif correspond au deuxième mode de fonctionnement si la vitesse du véhicule électrique est supérieure ou égale à la seconde vitesse seuil, la seconde vitesse seuil étant comprise entre 15 et 30 km/h, de préférence égale à 20 km/h ;
- chaque unité comporte un premier contacteur de batterie propre, dans un état fermé, à connecter la batterie à des dispositifs auxiliaires de l'unité considérée, et dans lequel lorsque le mode de fonctionnement commun est le deuxième mode de fonctionnement : le premier contacteur de batterie d'une unité, qui détecte être apte à collecter la puissance électrique externe, est placé dans un état ouvert, les dispositifs auxiliaires étant alimentés par la puissance électrique externe ; et le premier contacteur de batterie d'une unité, qui détecte être inapte à collecter la puissance électrique externe, est placé dans l'état fermé, les dispositifs auxiliaires étant alimentés par la puissance électrique interne ;
- chaque unité comporte un deuxième contacteur de batterie propre, dans un état fermé, à connecter la batterie au moteur et avantageusement à des dispositifs auxiliaires de l'unité considérée, et dans lequel lorsque le mode de fonctionnement commun est le troisième mode de fonctionnement, le deuxième contacteur de batterie est dans l'état fermé et lorsque le mode de fonctionnement commun est le premier mode de fonctionnement le deuxième contacteur de batterie est dans un état ouvert.

L'invention a également pour objet un véhicule électrique constitué d'au moins deux unités, chaque unité comportant : un moteur ; au moins un moyen de collecte propre à collecter une puissance électrique externe depuis le système d'alimentation électrique ; et une batterie propre à délivrer une puissance électrique interne, chaque unité étant propre à fonctionner à l'instant courant dans un mode de fonctionnement sélectionné parmi une pluralité de modes de fonctionnement, la pluralité de modes de fonctionnement comportant : un mode de fonctionnement principal dans lequel le moteur fonctionne en traction en utilisant la puissance électrique externe collectée par le moyen de collecte; et un mode de fonctionnement alternatif dans lequel le moteur n'est pas alimenté par la puissance électrique externe, caractérisé en ce que ledit véhicule électrique est propre à mettre en oeuvre un procédé de franchissement conforme au procédé précédent, une liaison de communication étant établie entre les unités du véhicule électrique afin de permettre la transmission, entre une première et une seconde unité, d'une information indicative du mode de fonctionnement à l'instant courant de la première unité, afin que la seconde unité adapte son mode de fonctionnant à l'instant courant en conséquence, et inversement.

De préférence, ledit véhicule est un véhicule guidé, de préférence encore un tramway.

De préférence encore, le moyen de collecte d'une unité dudit véhicule électrique comporte un frotteur propre à venir en contact électrique d'un rail d'alimentation implanté dans le sol du système d'alimentation électrique.

L'invention et ses avantages seront mieux compris à la lecture de la description détaillée qui va suivre d'un mode de réalisation particulier, donné uniquement à titre d'exemple illustratif et non limitatif, cette description étant faite en se référant aux dessins annexés sur lesquels :
- la figure 1 représente une première manière de franchir une zone neutre d'une installation d'alimentation par le sol par un véhicule électrique constitué de deux unités ;
- la figure 2 est une représentation d'une seconde manière de franchir la zone neutre de la figure 1 ;
- la figure 3 est une représentation d'une troisième manière de franchir une zone neutre de la figure 1 .

Pour des raisons de clarté, des chiffres de référence ont été portés uniquement sur la première étape de chaque figure. Cependant, les objets identiques d'une étape à l'autre seront indiqués par les mêmes chiffres de référence.

Les figures représentent un véhicule électrique 10, de préférence un tramway, constitué de deux unités attelées l'une à l'autre, une unité de tête 11 et une unité de queue 12 en considérant le sens de déplacement du véhicule indiqué par la flèche V. En variante, le véhicule est constitué de plus de deux unités.

De préférence, ces unités sont identiques entres elles.

Une unité comporte un ou plusieurs moteurs de traction.

Une unité comporte différents dispositifs auxiliaires (climatisation, lumières, etc.). Il s'agit des équipements qui ne participent pas à la traction.

Une unité comporte un ou plusieurs frotteurs, qui, en position abaissée, sont propres à venir en contact mécanique et électrique avec les segments d'un rail d'alimentation d'un système d'alimentation par le sol. Ainsi l'unité 11 comporte des frotteurs 13 et 15, et l'unité de queue 12 comporte des frotteurs 14 et 16. L'énergie électrique externe captée depuis le sol est alors propre à être fournie aux équipements de l'unité considérée (moteur et/ou dispositifs auxiliaires).

Une unité embarque une ou plusieurs batteries, propres à stocker de l'énergie et à fournir une énergie électrique interne aux équipements de l'unité considérée (moteur et/ou dispositifs auxiliaires).

Une unité est munie d'un contacteur de batterie. Le contacteur permet de connecter la batterie aux différents équipements de l'unité pour que la batterie se supplée temporairement à l'alimentation externe.

La batterie alimente alors soit seulement les dispositifs auxiliaires, lorsque la traction est inhibée, soit les dispositifs auxiliaires et le moteur, lorsque la traction n'est pas inhibée.

Le contacteur de batterie peut ainsi être dans deux états différents : dans un premier état, le contacteur de batterie est fermé de manière à relier électriquement les batteries aux équipements à alimenter ; dans un second état, le contacteur de batterie est ouvert isolant les batteries, des différents équipements de l'unité.

Une unité comporte un calculateur de contrôle/commande, qui est propre à commander les différents composants de cette unité pour qu'elle opère dans un mode de fonctionnement sélectionné parmi trois modes de fonctionnement possibles:
Dans un premier mode de fonctionnement, ou mode de fonctionnement principal, l'unité est propre à capter une puissance électrique depuis le système d'alimentation par le sol et les moteurs fonctionnent en traction en utilisant cette puissance électrique captée. Dans ce premier mode de fonctionnement, le contacteur de batterie est dans l'état ouvert.

Dans un second mode de fonctionnement, qui constitue un mode de fonctionnement alternatif, l'unité ne capte plus de puissance électrique depuis le sol. Les moteurs de l'unité ne fonctionnement pas en traction. On dit que la traction est inhibée. Le déplacement de l'unité considérée s'effectue alors sur l'erre, c'est-à-dire sur l'élan de l'unité considérée. Dans ce second mode de fonctionnement, le contacteur de batterie peut être soit dans l'état ouvert et la batterie n'alimente aucun des éléments embarqués dans le véhicule, soit dans l'état fermé et la batterie alimente alors les dispositifs auxiliaires.

Dans un troisième mode de fonctionnement, qui constitue un autre mode de fonctionnement alternatif, l'unité ne capte plus de puissance électrique depuis le sol, mais les moteurs fonctionnent en traction en utilisant une puissance électrique fournie par les batteries embarquées à bord de l'unité considérée. Dans ce troisième mode de fonctionnement, le contacteur de batterie est dans l'état fermé.

Enfin, le véhicule 10 comporte une liaison de communication entre les calculateurs embarqués de chacune des unités constituant le véhicule, afin qu'une unité puisse à chaque instant sélectionner un mode de fonctionnement qui soit en cohérence avec les modes de fonctionnement des autres unités. Cette liaison peut être filaire ou radio.

Sur les figures, chaque mode de fonctionnement est représenté par un motif spécifique à l'intérieur du rectangle schématisant une unité. En outre, l'état du contacteur de batterie est schématisé par un cadre d'épaisseur spécifique délimitant le rectangle schématisant une unité. Plus précisément un cadre d'épaisseur réduite représente un état fermé du contacteur de batterie et un cadre d'épaisseur augmentée représente un état ouvert du contacteur de batterie.

Le procédé selon l'invention associe de préférence trois manières de franchir une zone neutre en fonction de la vitesse instantanée du véhicule électrique.

Si la vitesse du véhicule 10 est inférieure à une première vitesse seuil, par exemple égale à 5 km/h, la manière de franchir la zone neutre 24 est conforme à l'état de la technique représenté sur la figure 1 et présenté ci-dessus.

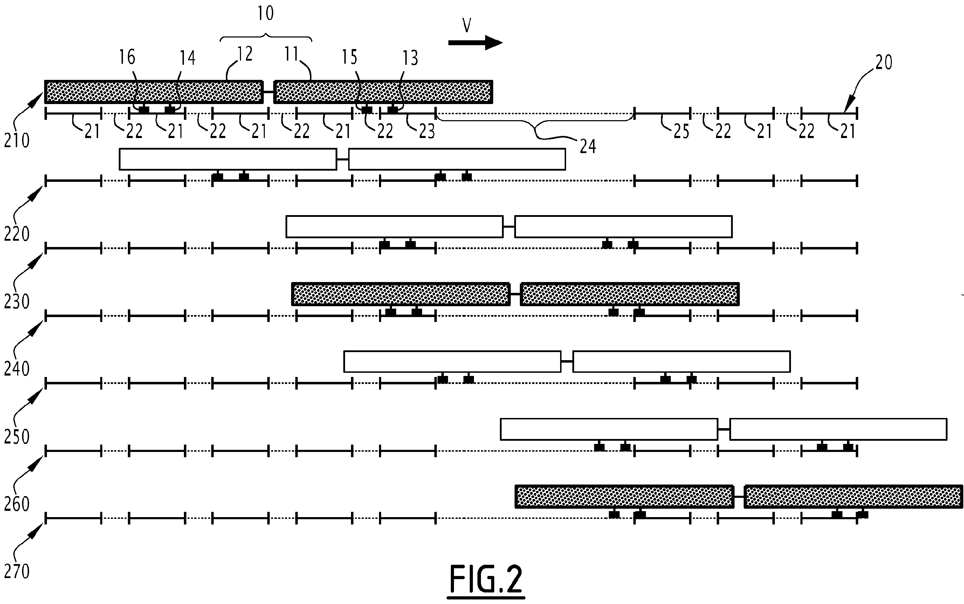

Si la vitesse du véhicule 10 est supérieure ou égale au premier vitesse seuil, mais inférieure à une seconde vitesse seuil, par exemple égale à 20 km/h, la manière de franchir la zone neutre 24 est représentée par la figure 2.

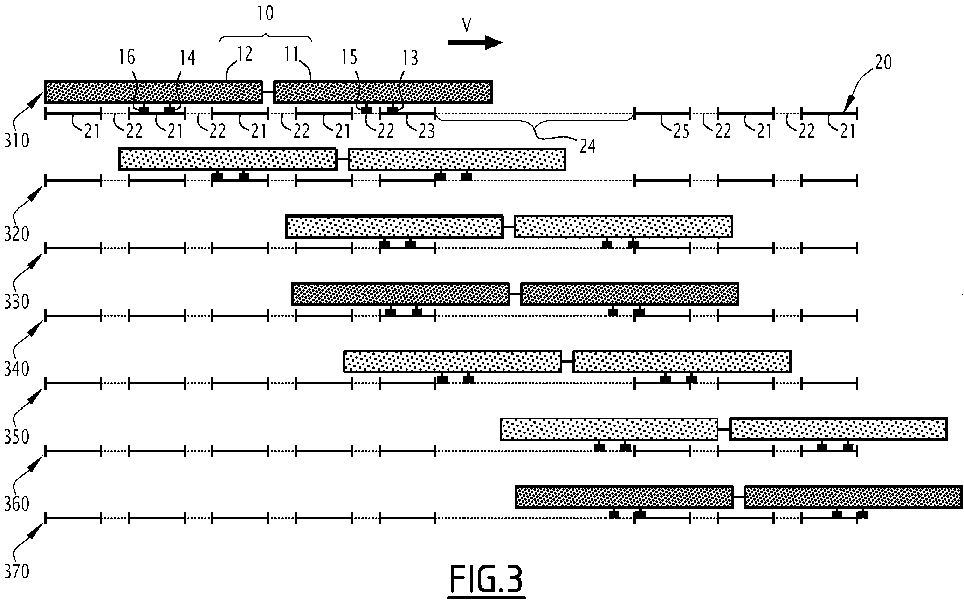

Enfin, si la vitesse du véhicule 10 est supérieure ou égale à la seconde vitesse seuil, la manière de franchir la zone neutre 24 est représentée par la figure 3.

En variante, le procédé de franchissement met en oeuvre soit la seconde manière de franchir la zone neutre et la troisième manière de franchir la zone neutre (ce qui revient à dire que la première vitesse seuil est nulle), soit uniquement la seconde manière de franchir la zone neutre ou uniquement la troisième manière de franchir la zone neutre.

En se référant à la figure 1, selon la première manière de franchir la zone neutre, l'unité qui ne peut pas capter d'énergie depuis le sol est placée dans le second mode de fonctionnement, c'est-à-dire en traction inhibée, tandis que l'unité qui peut capter de l'énergie depuis le sol, est placée dans le premier mode de fonctionnement, ses moteurs fonctionnant en traction. Cette unité propulse alors l'autre unité. Avantageusement et comme représenté à la figure 1 par un cadre d'épaisseur réduite, dans le second mode de fonctionnement le contacteur de batterie est dans l'état fermé et les dispositifs auxiliaires sont alimentés par la batterie tandis que la traction est inhibée.

Cette première manière de franchir la zone neutre 24 est retenue lorsque le véhicule 10 a une vitesse faible.

En effet, à basse vitesse, bien que le train reste secoué par des à-coups, le risque principal réside dans un arrêt complet du train dans la zone non alimentée si la vitesse initiale est insuffisante pour franchir cette zone sur l'erre. Ainsi, un comportement non-homogène est privilégié, de sorte que la conservation de la traction permette de limiter ce risque.

En se référant à la figure 2, dans la seconde manière de franchir la zone neutre 24, tant qu'au moins une unité du véhicule ne peut pas capter d'énergie depuis le sol, toutes les unités du véhicule sont maintenues dans le troisième mode de fonctionnement, dans lequel la traction s'effectue à partir de l'énergie stockée par les batteries embarquées.

Ainsi, dans la première étape 210, en amont de la zone neutre 24, les deux unités 11 et 12 du véhicule 10 sont dans le premier mode de fonctionnement.

Dans la deuxième étape 220, lorsque le frotteur arrière 15 de l'unité de tête 11 quitte le contact avec le segment de conduction amont 23, l'unité de tête 11 ne peut plus capter d'énergie depuis le sol. En conséquence, l'unité de tête 11 bascule dans le troisième mode de fonctionnement. Elle communique à l'unité de queue 12 ce changement de mode de fonctionnement. L'unité de queue 12 réagit à cette information en basculant à son tour dans le troisième mode de fonctionnement.

A la troisième étape 230, tant qu'au moins une des unités ne peut capter de l'énergie depuis le sol, l'ensemble des unités restent dans le troisième mode de fonctionnement.

Dans la quatrième étape 240, lorsque son frotteur avant 13 entre en contact du segment de conduction aval 25, l'unité de tête 11 peut à nouveau capter une alimentation depuis le sol. Puisqu'au même moment, les frotteurs de l'unité de queue peuvent encore capter de l'énergie depuis le segment conducteur amont 23, les deux unités basculent dans le premier mode de fonctionnement.

A la cinquième étape 250, lorsque le frotteur arrière 16 de l'unité de queue 12 perd le contact avec le segment de conduction amont 23, l'unité de queue 12 ne peut plus être alimentée par le sol. En conséquence, l'unité de queue 12 bascule dans le troisième mode de fonctionnement. Elle communique à l'unité de tête ce changement de mode de fonctionnement. L'unité de tête 11 réagit à la réception de cette information en basculant à son tour dans le troisième mode de fonctionnement.

Dans la sixième étape 260, tant qu'au moins une des unités ne peut capter de l'énergie depuis le sol, l'ensemble des unités restent dans le troisième mode de fonctionnement.

Enfin à la septième étape 270, dès que l'unité de queue 12 peut capter de l'énergie depuis le sol (c'est-à-dire au moment où son frotteur avant 14 entre en contact avec le segment conducteur aval 25), les deux unités basculent à nouveau dans le premier mode de fonctionnement.

Dans ce second mode de réalisation, lorsqu'une unité est dans le premier mode de fonctionnement, son contacteur de batterie est dans l'état ouvert alors que lorsqu'une unité est dans le troisième mode de fonctionnement, son contacteur de batterie est dans l'état fermé.

Cette seconde manière de franchir la zone neutre présente l'avantage d'utiliser comme mode de fonctionnement commun, le troisième mode de fonctionnement, c'est-à-dire la traction sur batteries. La motricité du véhicule est donc assurée, ainsi que le confort des passagers du fait d'un comportement homogène du véhicule.

Cependant, cette manière de faire conduit à une sollicitation des batteries et par conséquent à un vieillissement anticipé de celles-ci.

La figure 3 illustre une troisième manière de franchir la zone neutre.

Dans une première étape 310, en amont de la zone neutre 24, les deux unités se trouvent dans le premier mode de fonctionnement. Leurs contacteurs de batterie sont dans l'état ouvert.

Dans la seconde étape 320, dès que l'unité de tête 11 ne peut plus collecter d'énergie depuis le sol, elle bascule dans le second mode de fonctionnement, c'est-à-dire en traction inhibée. Ainsi, à partir de cet instant, l'unité de tête 11 fonctionne sur l'erre. A cet instant, le contacteur de batterie de l'unité de tête 11 est basculé dans l'état fermé de manière à ce que les batteries fournissent une puissance aux dispositifs auxiliaires.

L'unité de tête 11 informe l'unité de queue 12 de ce changement de mode de fonctionnement. En réponse, l'unité de queue 12 bascule dans le second mode de fonctionnement, c'est-à-dire en traction inhibée. Cependant, le contacteur de batterie de l'unité de queue 12 reste dans l'état ouvert, les dispositifs auxiliaires étant alimentés par la puissance électrique que les frotteurs de l'unité de queue 12 peuvent capter du rail d'alimentation.

Dans la troisième étape 330, les deux unités restent en traction inhibée, tant que les deux unités n'ont pas retrouvé, toutes les deux, la possibilité de capter de l'énergie depuis le sol.

A la quatrième étape 340, l'unité de tête 11 retrouve la capacité de collecter de l'énergie depuis le sol. Elle interroge alors l'unité de queue 12 pour savoir si celle-ci à la possibilité de capter de l'énergie depuis le sol. Dans l'affirmative, l'unité de tête 11 bascule dans le premier mode de fonctionnement et son contacteur de batterie est placé dans l'état ouvert.

L'unité de tête 11 informe l'unité de queue 12 de ce changement de mode de fonctionnement. En réponse, l'unité de queue 12 bascule également dans le premier mode de fonctionnement. Son contacteur de batterie qui était dans l'état ouvert, reste dans l'état ouvert.

La cinquième étape 350, l'unité de queue 12 s'engage à son tour sur la zone neutre 24 et perd l'alimentation par le sol. A cet instant, l'unité de queue 12 bascule dans le second mode de fonctionnement et son contacteur de batterie est placé dans l'état fermé.

L'unité de queue 12 informe l'unité de tête 11 de ce changement de mode de fonctionnement, de sorte que l'unité de tête 11 bascule à son tour dans le second mode de fonctionnement. Cependant, le contacteur de batterie de l'unité de tête 11 reste dans l'état ouvert, les dispositifs auxiliaires étant alimentés par la puissance électrique que les frotteurs de l'unité de tête 11 peuvent capter du rail d'alimentation.

Dans la sixième étape 360, les deux unités restent en traction inhibée, tant que les deux unités n'ont pas retrouvé la possibilité de capter de l'énergie par le sol.

Dans la septième étape 370, l'unité de queue 12 regagne la capacité de capter une puissance électrique depuis le sol. Elle interroge alors l'unité de tête 11 pour savoir si celle-ci à la possibilité de capter de l'énergie depuis le sol. Dans l'affirmative, l'unité de queue 12 bascule dans le premier mode de fonctionnement. Simultanément, l'état de son contacteur de batterie est basculé dans l'état ouvert.

Ce changement de mode de fonctionnement est communiqué depuis l'unité de queue 12 vers l'unité de tête 11. L'unité de tête 11 recevant cette information, bascule alors dans le premier mode de fonctionnement. Son contacteur de batterie qui était dans l'état ouvert, reste dans l'état ouvert.

Cette troisième manière de franchir une zone neutre permet un fonctionnement homogène du véhicule, sans utiliser la traction sur batterie, mais la seule inertie des unités du véhicule. Ceci présente l'avantage de réduire la sollicitation des batteries embarquées, ces dernières ne fournissant de l'énergie qu'aux seuls dispositifs auxiliaires et uniquement lorsqu'il n'est pas possible d'alimenter ces dispositifs auxiliaires par l'énergie captée depuis le système sol.

Le procédé venant d'être décrit consiste donc à propager le mode de fonctionnement alternatif sélectionné par une unité ayant perdu la capacité de capter du courant depuis le rail d'alimentation, aux autres unités du véhicule.

Le placement des unités dans un mode de fonctionnement alternatif commun permet d'avoir un comportement dynamique homogène entre les différentes unités à tout instant du franchissement de la zone neutre, en particulier au moment où en entrant ou en sortant de la zone neutre, une unité perd ou retrouve l'alimentation par le sol.

Il s'en suit un confort accru pour les passagers.

Si dans la précédente description, le cas d'un système d'alimentation électrique par le sol a été plus particulièrement évoqué, l'homme du métier connaît d'autres types de systèmes d'alimentation électrique pour lesquels la présente invention peut être mise en oeuvre. Il s'agit par exemple des systèmes d'alimentation au moyen d'une ligne aérienne de contact, le véhicule captant une puissance électrique au moyen de pantographes.

Par ailleurs, l'état des contacteurs de batterie ne constitue qu'une variante avantageuse du procédé selon l'invention. En effet, le choix peut être fait de ne pas alimenter les dispositifs auxiliaires lors du franchissement d'une zone neutre, ou tout au moins de n'alimenter que certains dispositifs auxiliaires considérés comme indispensables.

## Revendications

1. Procédé de franchissement par un véhicule électrique (10) constitué d'au moins deux unités (11, 12), d'une zone neutre (24) d'un système d'alimentation électrique, chaque unité comportant : un moteur ; au moins un moyen de collecte (11, 13, 14, 16) propre à collecter une puissance électrique externe auprès du système d'alimentation électrique ; et une batterie propre à délivrer une puissance électrique interne, chaque unité étant propre à fonctionner à l'instant courant dans un mode de fonctionnement sélectionné parmi une pluralité de modes de fonctionnement, la pluralité de modes de fonctionnement comportant : un mode de fonctionnement principal dans lequel le moteur fonctionne en utilisant la puissance électrique externe ; et au moins un mode de fonctionnement alternatif dans lequel le moteur n'est pas alimenté par la puissance électrique externe,
ledit procédé étant **caractérisé en ce que**, il comprend une étape de franchissement de la zone neutre (24), dans laquelle, lorsqu'au moins une unité du véhicule électrique (10) détecte être inapte à collecter la puissance électrique externe, ladite au moins une unité bascule dans le mode de fonctionnement alternatif, et transmet une information à chacune des autres unités du véhicule, ladite information étant indicative dudit basculement dans le mode de fonctionnement alternatif, et **en ce que**, lors de la réception de ladite information, chacune desdites autres unités bascule dans ledit mode de fonctionnement alternatif, de sorte qu'à tout instant, chaque unité se trouve dans un même mode de fonctionnement commun afin que le véhicule adopte une dynamique homogène.

2. Procédé selon la revendication 1, dans lequel, lors de l'étape de franchissement, lorsque l'ensemble des unités du véhicule électrique sont dans le mode de fonctionnement alternatif et que l'ensemble des unités du véhicule électrique détectent être aptes à collecter la puissance électrique externe, les unités sont propres à communiquer entre elles pour basculer dans le mode de fonctionnement principal.

3. Procédé selon la revendication 1 ou 2, dans lequel l'étape de franchissement est mise en oeuvre pour le franchissement d'une zone neutre lorsque la vitesse du véhicule électrique (10) est supérieure à une première vitesse seuil, la première vitesse seuil étant comprise entre 2 et 10 km/h, de préférence égale à 5 km/h.

4. Procédé selon l'une quelconque des revendications 1 à 3, dans lequel ledit mode de fonctionnement principal est un premier mode de fonctionnement et ledit au moins un mode de fonctionnement alternatif comprend : un deuxième mode de fonctionnement, dans lequel le moteur est en traction inhibée, l'unité se déplaçant sur l'erre ; et un troisième mode de fonctionnement, dans lequel le moteur fonctionne en traction en utilisant la puissance électrique interne fournie par la batterie.

5. Procédé selon la revendication 4, dans lequel lors de l'étape de franchissement, le mode de fonctionnement alternatif correspond au troisième mode de fonctionnement si la vitesse du véhicule électrique (10) est inférieure à une seconde vitesse seuil, et le mode de fonctionnement alternatif correspond au deuxième mode de fonctionnement si la vitesse du véhicule électrique (10) est supérieure ou égale à la seconde vitesse seuil, la seconde vitesse seuil étant comprise entre 15 et 30 km/h, de préférence égale à 20 km/h.

6. Procédé selon la revendication 4 ou la revendication 5, dans lequel, chaque unité (11, 12) comporte un premier contacteur de batterie propre, dans un état fermé, à connecter la batterie à des dispositifs auxiliaires de l'unité considérée, et dans lequel lorsque le mode de fonctionnement commun est le deuxième mode de fonctionnement :
- le premier contacteur de batterie d'une unité, qui détecte être apte à collecter la puissance électrique externe, est placé dans un état ouvert, les dispositifs auxiliaires étant alimentés par la puissance électrique externe ; et
- le premier contacteur de batterie d'une unité, qui détecte être inapte à collecter la puissance électrique externe, est placé dans l'état fermé, les dispositifs auxiliaires étant alimentés par la puissance électrique interne.

7. Procédé selon l'une quelconque des revendications 4 à 6, dans lequel, chaque unité (11, 12) comporte un deuxième contacteur de batterie propre, dans un état fermé, à connecter la batterie au moteur et avantageusement à des dispositifs auxiliaires de l'unité considérée, et dans lequel lorsque le mode de fonctionnement commun est le troisième mode de fonctionnement, le deuxième contacteur de batterie est dans l'état fermé et lorsque le mode de fonctionnement commun est le premier mode de fonctionnement le deuxième contacteur de batterie est dans un état ouvert.

8. Véhicule électrique (10) constitué d'au moins deux unités (11, 12), chaque unité comportant : un moteur ; au moins un moyen de collecte (13, 15, 14, 16) propre à collecter une puissance électrique externe depuis le système d'alimentation électrique ; et une batterie propre à délivrer une puissance électrique interne, chaque unité étant propre à fonctionner à l'instant courant dans un mode de fonctionnement sélectionné parmi une pluralité de modes de fonctionnement, la pluralité de modes de fonctionnement comportant : un mode de fonctionnement principal dans lequel le moteur fonctionne en traction en utilisant la puissance électrique externe collectée par le moyen de collecte; et un mode de fonctionnement alternatif dans lequel le moteur n'est pas alimenté par la puissance électrique externe, **caractérisé en ce que** ledit véhicule électrique est propre à mettre en oeuvre un procédé de franchissement conforme à l'une quelconque des revendications 1 à 7, une liaison de communication étant établie entre les unités (11, 12) du véhicule électrique (10) afin de permettre la transmission, entre une première et une seconde unité, d'une information indicative du mode de fonctionnement à l'instant courant de la première unité, afin que la seconde unité adapte son mode de fonctionnant à l'instant courant en conséquence, et inversement.

9. Véhicule électrique (10) selon la revendication8, dans lequel ledit véhicule est un véhicule guidé, de préférence un tramway.

10. Véhicule électrique (10) selon l'une quelconque des revendications 8 à 9, dans lequel le moyen de collecte d'une unité dudit véhicule électrique comporte un frotteur propre à venir en contact électrique d'un rail d'alimentation implanté dans le sol du système d'alimentation électrique.

## Patentansprüche

1. Verfahren zum Überqueren, durch ein Elektrofahrzeug (10), das aus mindestens zwei Einheiten (11, 12) besteht, eines neutralen Bereichs (24) eines Stromversorgungssystems, jede Einheit umfassend: einen Motor; mindestens eine Abnehmereinrichtung (11, 13, 14, 16), die in der Lage ist, eine externe elektrische Leistung von dem Stromversorgungssystem abzunehmen; und eine Batterie, die in der Lage ist, interne elektrische Leistung bereitzustellen, wobei jede Einheit geeignet ist, zum aktuellen Zeitpunkt in einem Betriebsmodus betrieben zu werden, der ausgewählt ist aus einer Vielzahl von Betriebsmodi, die Vielzahl von Betriebsmodi umfassend: einen Hauptbetriebsmodus, in dem der Motor unter Verwendung der externen elektrischen Leistung betrieben wird; und mindestens einen alternativen Betriebsmodus, in dem der Motor nicht durch die externe elektrische Leistung versorgt wird, wobei das Verfahren **dadurch gekennzeichnet ist, dass** es einen Schritt eines Überquerens des neutralen Bereichs (24) umfasst, in dem, wenn mindestens eine Einheit des Elektrofahrzeugs (10) erfasst, dass sie nicht in der Lage ist, externe elektrische Energie abzunehmen, die mindestens eine Einheit in den alternativen Betriebsmodus umschaltet und Informationen an jede der anderen Einheiten des Fahrzeugs überträgt, wobei die Informationen indikativ für das Umschalten in den alternativen Betriebsmodus sind, und dass beim Empfang der Informationen jede der anderen Einheiten in den alternativen Betriebsmodus umschaltet, sodass sich jederzeit jede Einheit in demselben gemeinsamen Betriebsmodus befindet, damit das Fahrzeug eine einheitliche Dynamik annimmt.

2. Verfahren nach Anspruch 1, wobei bei dem Überquerungsschritt, wenn alle Einheiten des Elektrofahrzeugs in dem alternativen Betriebsmodus sind und alle Einheiten des Elektrofahrzeugs erfassen, dass sie in der Lage sind, externe elektrische Leistung abzunehmen, die Einheiten geeignet sind, um miteinander zu kommunizieren, um in den Hauptbetriebsmodus umzuschalten.

3. Verfahren nach Anspruch 1 oder 2, wobei der Schritt eines Überquerens durchgeführt wird, um einen neutralen Bereich zu überqueren, wenn die Geschwindigkeit des Elektrofahrzeugs (10) größer ist als ein erster Geschwindigkeitsschwellenwert, wobei der erste Geschwindigkeitsschwellenwert zwischen 2 und 10 km/h, vorzugsweise 5 km/h, ist.

4. Verfahren nach einem der Ansprüche 1 bis 3, wobei der Hauptbetriebsmodus ein erster Betriebsmodus ist und der mindestens eine alternative Betriebsmodus Folgendes umfasst: einen zweiten Betriebsmodus, in dem der Motor traktionsgehemmt ist, wobei die Einheit nachläuft; und ein dritte Betriebsmodus, in dem der Motor unter Verwendung der von der Batterie bereitgestellten internen elektrischen Leistung traktionsbetrieben ist.

5. Verfahren nach Anspruch 4, wobei bei dem Schritt des Überquerens der alternative Betriebsmodus dem dritten Betriebsmodus entspricht, wenn die Geschwindigkeit des Elektrofahrzeugs (10) kleiner ist als ein zweiter Geschwindigkeitsschwellenwert, und der alternative Betriebsmodus dem zweiten Betriebsmodus entspricht, wenn die Geschwindigkeit des Elektrofahrzeugs (10) größer als oder gleich wie der zweite Geschwindigkeitsschwellenwert ist, wobei der zweite Geschwindigkeitsschwellenwert zwischen 15 und 30 km/h, vorzugsweise gleich 20 km/h, liegt.

6. Verfahren nach Anspruch 4 oder Anspruch 5, wobei jede Einheit (11, 12) einen ersten Batterieschütz aufweist, der in einem geschlossenen Zustand in der Lage ist, die Batterie mit Hilfsvorrichtungen der jeweiligen Einheit zu verbinden, und wobei, wenn der gemeinsame Betriebsmodus der zweite Betriebsmodus ist:
- der erste Batterieschütz einer Einheit, der erfasst, dass er in der Lage ist, die externe elektrische Leistung abzunehmen, in einen offenen Zustand versetzt wird, wobei die Hilfsvorrichtungen durch die externe elektrische Leistung mit Strom versorgt werden; und
- der erste Batterieschütz einer Einheit, der erfasst, dass er nicht in der Lage ist, die externe elektrische Leistung abzunehmen, in den geschlossenen Zustand versetzt wird, wobei die Hilfsvorrichtungen durch die interne elektrische Leistung gespeist werden.

7. Verfahren nach einem der Ansprüche 4 bis 6, wobei jede Einheit (11, 12) einen zweiten Batterieschütz umfasst, der in einem geschlossenen Zustand in der Lage ist, die Batterie mit dem Motor und vorteilhafterweise mit Hilfsvorrichtungen der jeweiligen Einheit zu verbinden, und wobei, wenn der gemeinsame Betriebsmodus der dritte Betriebsmodus ist, der zweite Batterieschütz in dem geschlossenen Zustand ist, und wenn der gemeinsame Betriebsmodus der erste Betriebsmodus ist, der zweite Batterieschütz in einem offenen Zustand ist.

8. Elektrofahrzeug (10), das aus mindestens zwei Einheiten (11, 12) besteht, jede Einheit umfassend: einen Motor; mindestens eine Abnehmereinrichtung (13, 15, 14, 16), die in der Lage ist, eine externe elektrische Leistung von dem Stromversorgungssystem abzunehmen; eine Batterie, die in der Lage ist, interne elektrische Leistung bereitzustellen, wobei jede Einheit in der Lage ist, zum aktuellen Zeitpunkt in einem Betriebsmodus betrieben zu werden, der ausgewählt ist aus einer Vielzahl von Betriebsmodi, die Vielzahl von Betriebsmodi umfassend: einen Hauptbetriebsmodus, in dem der Motor unter Verwendung der externen elektrischen Leistung traktionsbetrieben betrieben wird; und mindestens einen alternativen Betriebsmodus, in dem der Motor nicht durch die externe elektrische Leistung versorgt wird, **dadurch gekennzeichnet, dass** das Elektrofahrzeug in der Lage ist, ein Überfahrverfahren nach einem der Ansprüche 1 bis 7 durchzuführen, wobei eine Kommunikationsverbindung zwischen den Einheiten (11, 12) des Elektrofahrzeugs (10) hergestellt wird, um zwischen einer ersten und einer zweiten Einheit die Übertragung von Informationen zu ermöglichen, die indikativ für den Betriebsmodus zum aktuellen Zeitpunkt der ersten Einheit sind, damit die zweite Einheit ihren Betriebsmodus zum aktuellen Zeitpunkt entsprechend anpasst, und umgekehrt.

9. Elektrofahrzeug (10) nach Anspruch 8, wobei das Fahrzeug ein spurgeführtes Fahrzeug, vorzugsweise eine Straßenbahn, ist.

10. Elektrofahrzeug (10) nach einem der Ansprüche 8 bis 9, wobei die Abnehmereinrichtung einer Einheit des Elektrofahrzeugs einen Schleifer umfasst, der in der Lage ist, in elektrischen Kontakt mit einer Stromschiene zu kommen, die im Boden des Stromversorgungssystems implantiert ist.

## Claims

1. A method for crossing a neutral zone (24) of a power supply system by an electric vehicle (10) consisting of at least two units (11, 12), each unit comprising: a motor; at least one means of collection (11, 13, 14, 16) capable of collecting external electrical power from the power supply system; and a battery capable of delivering internal electrical power, each unit being capable of operating at the current moment in an operating mode selected from a plurality of operating modes, the plurality of operating modes comprising: a primary operating mode wherein the motor operates on external electrical power; and at least one alternative operating mode wherein the motor is not supplied with external electrical power,
said method comprising a step of crossing the neutral zone, wherein, when at least one unit of the electric vehicle detects that it is unable to collect external electrical power, said at least one unit of the electric vehicle switches over to the alternative operating mode, and transmits a signal to each of the other units of the vehicle, said information being indicative of said switchover to the alternative operating mode, and in that, when said signal is received, each of said other units switches to said alternative operating mode, so that at each moment, each unit is in the same shared operating mode so that the vehicle adopts a homogeneous motion.

2. A method according to claim 1, wherein, during the step of crossing, when all units of the electric vehicle are in the alternative operating mode and all units of the electric vehicle detect that they are able to collect external electrical power, the units are able to communicate with one another to switch over to the primary operating mode.

3. A method according to claim 1 or 2, wherein the step of crossing is implemented to cross a neutral zone when the speed of the electric vehicle (10) is greater than a first speed threshold, the first speed threshold being comprised between 2 and 10 km/h, and preferably equal to 5 km/h.

4. A method according to any one of the claims 1 to 3, wherein said primary operating mode is a first operating mode, and said at least one alternative operating mode comprises: A second operating mode, wherein the traction of the motor is inhibited, with the unit coasting; and a third operating mode, wherein the motor is providing traction using the internal electrical power provided by the battery.

5. A method according to claim 4, during the step of crossing, the alternative operating mode corresponds to the third operating mode if the speed of the electric vehicle (10) is less than a second threshold speed, and the alternative operating mode corresponds to the second operating mode if the speed of the electric vehicle (10) is greater than or equal to the second threshold speed, the second threshold speed being comprised between 15 and 30 km/h, and preferably equal to 20 km/h.

6. A method according to claim 4 or claim 5, wherein, each unit (11, 12) comprises a first battery contactor capable, in a closed state, of connecting the battery to auxiliary devices of the unit in question, and wherein when the shared operating mode is the second operating mode:
- the first battery contactor of a unit, if detecting that it is able to collect external electrical power, is placed in an open state, the auxiliary devices being supplied by the external electrical power; and
- the first battery contactor of a unit, if detecting that it is unable to collect external electrical power, is placed in the closed state, the auxiliary devices being supplied by the internal electrical power.

7. A method according to any one of the claims 4 to 6, wherein each unit (11, 12) comprises a second battery contactor capable, in a closed state, of connecting the battery to the motor, and advantageously to auxiliary devices of the unit in question, and wherein when the shared operating mode is the third operating mode, the second battery contactor is in the closed state, and when the shared operating mode is the first operating mode, the second battery contactor is in an open state.

8. An electric vehicle (10) consisting of at least two units (11, 12), each unit comprising: a motor; at least one means of collection (13, 14, 15, 16) capable of collecting external electrical power from the power supply system; and a battery capable of providing internal electrical power, each unit being capable of operating at the current moment in an operating mode selected from a plurality of operating modes, the plurality of operating modes comprising: A primary operating mode wherein the motor provides traction on the external electrical power collected by the means of collection; and an alternative operating mode wherein the motor is not supplied by the external electrical power, **characterized in that** said electric vehicle is capable of implementing a method of crossing according to any one of the claims 1 to 7, a communications link being established between the units (11, 12) of the electric vehicle (10) in order to enable the transmission, between a first and a second unit, of a signal indicative of the operating mode of the first unit at the current moment, in order for the second unit to adapt its operating mode at the current moment accordingly, and vice versa.

9. An electric vehicle (10) according to claim 8, wherein said vehicle is a guided vehicle, preferably a tram.

10. An electric vehicle (10) according to any one of the claims 8 to 9, wherein the means of collection of a unit of said electric vehicle comprises a shoe capable of coming into electrical contact with a ground-level power rail of the power supply system.
